# EUROPEAN PATENT APPLICATION

(11) **EP 2 530 473 A1**
(43) Date of publication of application: **05.12.2012**
(21) Application number: 11737060.1
(22) Date of filing: 26.01.2011
(51) Int. Cl.: G01N 35/10, G01N 1/00

(54) **AUTOMATIC ANALYZING DEVICE**

(30) Priority: 29.01.2010 JP 2010018089
(71) Applicant: Hitachi High-Technologies Corporation, Tokyo 105-8717 (JP)
(72) Inventor: SARWAR Shahed, Hitachinaka-shi Ibaraki 312-8504 (JP); TANAKA Kazuhiro, Hitachinaka-shi Ibaraki 312-8504 (JP)
(74) Representative: Strehl Schübel-Hopf & Partner
(86) International application number: PCT/JP2011/051516
(87) International publication number: WO 2011/093347

(57) **Abstract**

Provided is an automatic analyzing device including a sample container 2 for accommodating a sample 1 to be assayed, a dispensing probe 5 for dispensing the sample 1, and an electroconductive tip 11 removably mounted on a portion of the dispensing probe 5, the portion being to be dipped in the sample 1; wherein this analyzing device detects capacitance between the tip 11 of the dispensing probe 5 and a region having a ground potential 9 predefined as a reference electric potential in the analyzing device, and on the basis of a result of the detection, determines a mounted state of the tip 11 on the dispensing probe 5. A fall of the tip from the probe is thus immediately detected.

## Description

### Technical Field

The present invention relates to automatic analyzing devices that conduct qualitative and quantitative analyses upon biological samples of serum, urine, and the like.

### Background Art

Automatic analyzing devices analyze samples to be assayed, such as biological samples of serum, urine, and the like, by adding reagents and quantitatively measuring physical properties of the samples.

These automatic analyzing devices generally use a probe to suction any one of the samples to be measured, or a reaction solution that is a liquid mixture of a reagent and one of the samples to be measured, and then move the probe to an analyzing section. It is necessary in this case to suppress cross contamination due to unintentional or inadvertent transfer or carryover of the reaction solution to other (non-intended) samples after the solution has stuck to an outer wall of the probe.

Patent Document 1, for example, discloses a technique for removably providing a disposable tip on a portion of a probe that is to be dipped in a substance for suctioning, and replacing this tip, as appropriate, to suppress cross contamination that might result if the substance sticking to the tip is unintentionally or inadvertently introduced into other (non-intended) substances and contaminates the substances.

### Prior Art Literature

### Patent Documents

Patent Document 1: JP-1996-29424-A

### Summary of the Invention

### Problem to be Solved by the Invention

During the use of a probe with a disposable tip removably provided thereon, the tip is likely to become dislodged from the probe and fall if mounted inappropriately. The fall of the tip could lead to loss of the sample or the reaction solution, contamination of an operator-accessible region in the automatic analyzing device, a spread of contamination due to continued operation, and/or other unwanted events. In case of the tip falling, therefore, it is important to immediately detect the fall and to suppress a further spread of contamination by stopping the operation of the dispensing device.

In the foregoing prior art, however, no description is given of any preventives or countermeasures against the fall of the tip. One way useable to detect whether the disposable tip is properly mounted on the probe would be by, for example, confirming this using an optical type of sensor. Before the confirmation becomes possible, however, the disposable tip must be moved to a position at which the sensor is to detect the mounted state. In addition, immediately after the fall (abnormality) of the tip has occurred, device operation cannot be stopped, so the spread of contamination or other trouble cannot be suppressed.

The present invention has been made with the above in mind, and an object of the invention is to provide an automatic analyzing device capable of detecting immediately a fall of a tip from a probe.

### Means for Solving the Problem

In order to fulfill the above object, an automatic analyzing device according to the present invention, for analyzing a sample to be assayed, includes: a sample container for accommodating the sample to be assayed; a probe mechanism for dispensing the sample to be assayed; an electroconductive tip removably mounted on a portion of the probe mechanism, the portion being to be dipped in the sample to be assayed; a capacitance detecting unit for detecting capacitance between the tip of the probe mechanism and a region having a reference electric potential predefined in the automatic analyzing device; and a mounted-state determining unit for determining, in accordance with a detection result by the capacitance detecting unit, a mounted state of the tip with respect to the probe mechanism.

### Effect of the Invention

In accordance with the present invention, a fall of the tip from the probe is immediately detected.

### Brief Description of the Drawings

Fig. 1 is a schematic diagram showing an overall configuration of an automatic analyzing device according to an embodiment of the present invention;
Fig. 2A is a diagram showing a tip-mounting step in a dispensing process conducted by the automatic analyzing device according to the embodiment of the present invention;
Fig. 2B is a diagram showing a suctioning step in the dispensing process conducted by the automatic analyzing device according to the embodiment of the present invention;
Fig. 2C is a diagram showing a discharging step in the dispensing process conducted by the automatic analyzing device according to the embodiment of the present invention;
Fig. 2D is a diagram showing a tip-discarding step in the dispensing process conducted by the automatic analyzing device according to the embodiment of the present invention;
Fig. 3 is a diagram showing an example of a relationship between capacitance present between the dispensing probe of the automatic analyzing device according to the embodiment of the present invention and a region having a predefined ground potential, and an output voltage of a capacitance detecting unit; and
Fig. 4 is a diagram showing, by way of example, how capacitance changes with time in the dispensing process conducted by the automatic analyzing device according to the embodiment of the present invention.

### Mode of Carrying Out the Invention

An embodiment of the present invention will be described referring to the accompanying drawings.

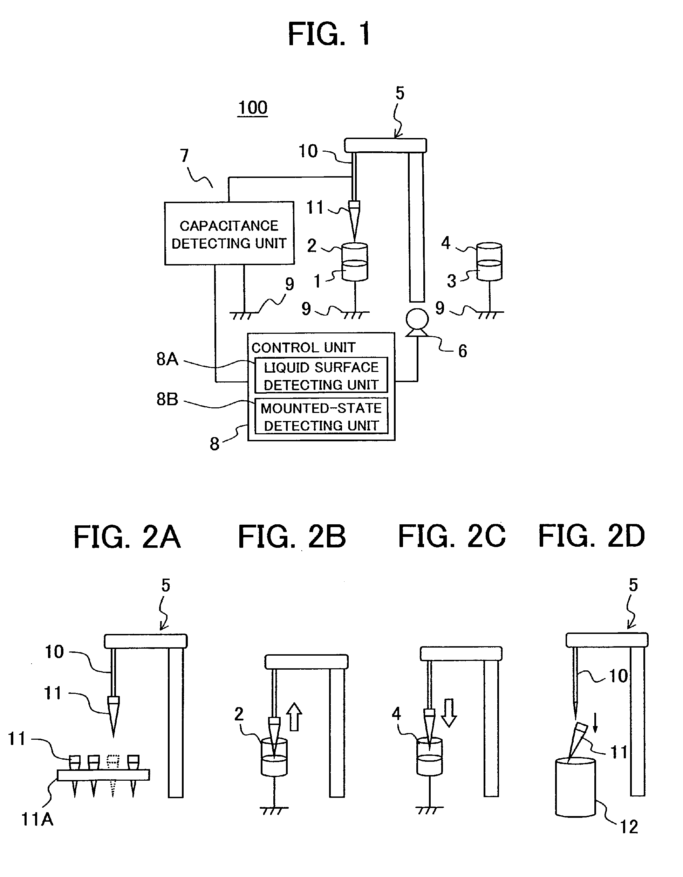

Fig. 1 is a diagram that schematically shows, of an automatic analyzing device configuration according to the embodiment of the present invention, only dispensing-related constituent elements with a tip mounted on a nozzle of a dispensing mechanism.

Referring to Fig. 1, the automatic analyzing device 100 according to the present embodiment includes: a sample container 2 that accommodates a sample 1 to be assayed (e.g., a biological sample of serum, urine, or the like); a reaction vessel 4 that accommodates a liquid mixture 3 of a reagent and the sample 1 to be assayed; a dispensing probe 5 that dispenses into the reaction vessel 4 the sample 1 to be assayed; a driving unit 6 that pivotally drives and vertically drives the dispensing probe 5; a capacitance detecting unit 7 as means for detecting capacitance between the dispensing probe 5 and a region having a reference electric potential (described later herein); and a control unit 8 that controls operation of the entire automatic analyzing device 100.

The dispensing probe 5, provided to face an opening in the sample container 2, is fitted with a nozzle 10 that is to be dipped in the sample 1 accommodated in the sample container 2, for suctioning the sample 1. A disposable electroconductive tip 11 is removably mounted at a distal-end (lower-end) portion of the nozzle 10, which is to be dipped in the sample 1. After suctioning the sample 1 to be assayed, the dispensing probe 5 is driven by the driving unit 6 to reach a position at which the nozzle 10 faces an opening in the reaction vessel 4, and deliver the sample 1 towards the reaction vessel 4. At this time, only the tip 11 comes into contact with the sample 1, thus suppresses sticking of the sample 1 to the nozzle 10, and hence, suppresses cross contamination.

The sample container 2 accommodating the sample 1 to be assayed is constructed of an electroconductive or non-electroconductive material, and is placed in a neighborhood of a region having a reference potential 9 predefined in the automatic analyzing device 100. An example of using the reference potential 9 as a ground potential (hereinafter referred to as the ground potential 9) is described in the present embodiment. When the nozzle 10 and the sample container 2 are opposed to each other, therefore, nearly three kinds of capacitance exist between the nozzle 10 and the region having the ground potential 9. That is to say, nearly the three kinds of capacitance are capacitance between the nozzle 10 and the sample 1 to be assayed, capacitance between the sample 1 and the region having the ground potential 9, and capacitance between the nozzle 10 and the region having the ground potential 9. If the sample container 2 is constructed of an electroconductive material, an electrode may be connected to a position at which, via the electroconductive sample container 2, the electrode comes into contact with the region having the ground potential 9, or an electrode connected to the region having the ground potential 9 may be positioned to come into contact with the sample 1 inside the sample container 2. In either of the two cases, the sample 1 accommodated in the sample container 2 may have the ground potential 9. In this case, the fact that capacitance exists between the nozzle 10 and the sample 1 means that the capacitance between the nozzle 10 and the region having the ground potential 9 exists, and at the same time, that the capacitance between the sample 1 and the region having the ground potential 9 does not exist.

The reaction vessel 4 accommodating the liquid mixture 3 is constructed of an electroconductive or non-electroconductive material, and is placed in the neighborhood of the region having the ground potential 9. When the nozzle 10 and the reaction vessel 4 are opposed to each other, therefore, nearly three kinds of capacitance exist between the nozzle 10 and the region having the ground potential 9. That is to say, the three kinds of capacitance are capacitance between the nozzle 10 and the liquid mixture 3, capacitance between the mixture 3 and the region having the ground potential 9, and capacitance between the nozzle 10 and the region having the ground potential 9. If the reaction vessel 4 is constructed of an electroconductive material, an electrode may be connected to a position at which, via the electroconductive reaction vessel 4, the electrode comes into contact with the region having the ground potential 9, or an electrode connected to the region having the ground potential 9 may be positioned to come into contact with the mixture 3 inside the reaction vessel 4. In this case, the fact that capacitance exists between the nozzle 10 and the mixture 3 means that the capacitance between the nozzle 10 and the region having the ground potential 9 exists, and at the same time, that the capacitance between the mixture 3 and the region having the ground potential 9 does not exist.

The capacitance detecting unit 7, electrically connected to the nozzle 10 as well as to the region having the ground potential 9, detects the capacitance exhibited between the nozzle 10 and the region having the ground potential 9, converts the detected capacitance into a voltage signal, and outputs the signal to the control unit 8.

The control unit 8 controls the operation of the entire automatic analyzing device 100 including the driving unit 6, the capacitance detecting unit 7, and so on. The control unit 8 includes: a liquid surface detecting unit 8A that uses the voltage signal from the capacitance detecting unit 7 to detect a liquid surface position of the sample 1 relative to a distal end (lower end) of the tip 11 mounted on the nozzle 10; and a mounted-state determining unit 8B that uses the voltage signal from the capacitance detecting unit 7 to serve as mounted-state determining means or a mounted-state determining unit for detecting the mounted state of the tip 11 with respect to the nozzle 10.

The control unit 8 controls operation of the dispensing probe 5 in accordance with a detection result from the liquid surface detecting unit 8A, and thus controls a dipping depth of the tip 11 below the liquid surface of the sample 1 in a dispensing process (described later herein). The control unit 8 also controls the operation of the entire automatic analyzing device 100 including the dispensing probe 5, in accordance with the detection result from the mounted-state detecting unit 8B. If an abnormal mounting state of the tip 11 on the nozzle 10 is detected by the mounted-state detecting unit 8B, the control unit 8 in addition to stopping the operation of the automatic analyzing device 100 alarms an operator about the abnormality by displaying an alarm message on a display unit (not shown) and/or giving off an alarm sound. The abnormal mounting state of the tip 11 on the nozzle 10 here means, for example, an undesigned fall of the tip 11, insufficient insertion of the nozzle 10 into the tip 11, or the like. The control unit 8 further controls operation of virtually all other constituent elements of the automatic analyzing device 100.

The liquid surface detecting unit 8A compares the voltage signal from the capacitance detecting unit 7, with a preassigned threshold level, and detects the liquid surface position in accordance with a result of the comparison.

The mounted-status detecting unit 8B compares the voltage signal from the capacitance detecting unit 7, with a preassigned threshold level, and detects the mounted state of the tip 11 on the nozzle 10 in accordance with a result of the comparison. Independent threshold levels are preassigned for each of operational states in the dispensing process described later, and one of these threshold levels is appropriately selected and used according to the particular operational state.

Figs. 2A to 2D are diagrams that show different steps of the dispensing process conducted by the automatic analyzing device according to the present embodiment. Fig. 2A is a diagram show that shows a tip-mounting step, Fig. 2B is a diagram show that shows a suctioning step, Fig. 2C is a diagram show that shows a discharging step, and Fig. 2D is a diagram show that shows a tip-discarding step.

In the tip-mounting step of Fig. 2A, the driving unit 6 drives the dispensing probe 5 without a tip 11 mounted thereupon and moves the probe 5 to a tip-mounting position. A tip rack 11A is provided at the tip-mounting position, and a plurality of unused tips 11 are arranged in the tip rack 11A. Each tip 11 is formed so that it can be mounted on and removed from the nozzle 10. The tip 11 can be mounted at the distal end of the nozzle 10 by inserting the tip 11 into the distal end. After normal mounting of the tip 11 on the nozzle 10, the automatic analyzing device proceeds to the suctioning step.

In the suctioning step of Fig. 2B, the nozzle 10 with the mounted tip 11 is moved to a suctioning position. The suctioning position is where the nozzle 10 of the dispensing probe 5 and the opening in the sample container 2 face each other. In the suctioning position, the driving unit 6 moves the dispensing probe 5 downward to lower the nozzle 10 into the sample container 2. After the dispensing probe 5 has reached a position at which the distal end (lower end) of the tip 11 mounted on the nozzle 10 is to be dipped in the sample 1 accommodated in the sample container 2, the downward movement of the dispensing probe 5 is stopped and the probe 5 is moved upward. Upon the sample 1 being suctioned into the tip 11, the automatic analyzing device proceeds to the discharging step.

In the discharging step of Fig. 2C, the nozzle 10 with the mounted tip 11 is moved to a discharging position. The discharging position is where the nozzle 10 of the dispensing probe 5 and the opening in the reaction vessel 4 face each other. In the discharging position, the driving unit 6 moves the dispensing probe 5 downward to insert the nozzle 10 into the reaction vessel 4. After discharging the sample 1, the dispensing probe 5 is moved upward. Upon the sample 1 being discharged from the tip 11 into the reaction vessel 4, the automatic analyzing device proceeds to the tip-discarding step.

In the tip-discarding step of Fig. 2D, the nozzle 10 with the mounted tip 11 is moved to a tip-discarding position. The tip-discarding position is where the nozzle 10 of the dispensing probe 5 and an opening in a tip-discarding vessel 12 for accommodating tips 11 discarded after being used are opposed to each other. In the tip-discarding position, a tip removal mechanism not shown removes the tip 11 from the nozzle 10 and throws away the used tip 11 into the tip-discarding vessel 12. After the tip 11 on the nozzle 10 has been properly discarded, the automatic analyzing device proceeds to the suctioning step of the dispensing process for next sample measurement, and repeats the dispensing process as often as necessary.

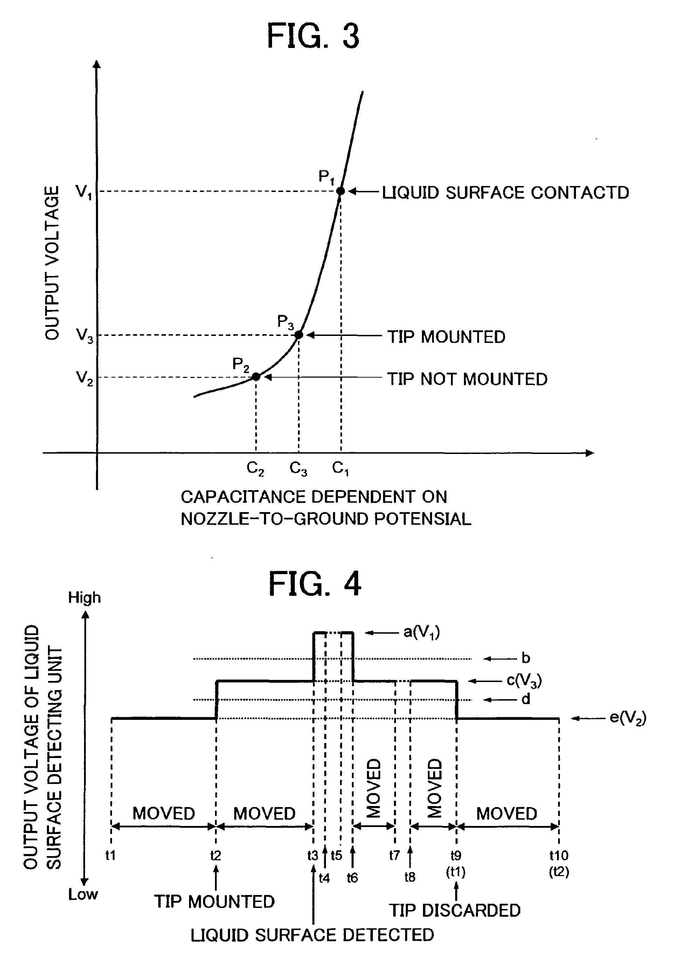

Fig. 3 is a diagram showing an example of a relationship of the capacitance between the nozzle 10 of the dispensing probe 5 of the automatic analyzing device 100 according to the present embodiment and the region having the ground potential 9, with respect to an output voltage of the voltage signal from the capacitance detecting unit 7. Changes in the capacitance between the nozzle 10 and the region having the ground potential 9 are plotted on a horizontal axis, and changes in the output voltage are plotted on a vertical axis.

As shown in Fig. 3, when the capacitance between the nozzle 10 and the region having the ground potential 9 is C1 (this capacitance is hereinafter referred to simply as the capacitance), the output voltage of the capacitance detecting unit 7 is V1, which decreases with the capacitance. When the capacitance is C3, the output voltage is V3, which further decreases with the capacitance. When the capacitance is C2, the output voltage is V2. The capacitance C3 is exhibited when the nozzle 10 has the tip 11 mounted thereupon, the capacitance C2 is exhibited when the nozzle 10 does not have the tip 11 mounted thereupon, and the capacitance C1 is exhibited when the tip 11 mounted on the nozzle 10 is dipped in the sample 1.

Fig. 4 is a diagram showing, by way of example, how the capacitance changes with time in the dispensing process. A vertical axis in Fig. 4 denotes changes in the voltage signal from the capacitance detecting unit 7, and a horizontal axis denotes elapse of time in the dispensing process. The output voltage of the voltage signal which is output from the capacitance detecting unit 7 to the control unit 8 is set so that as shown and described above in Fig. 3, the voltage changes along a characteristics curve.

A time interval from t1 to t2 corresponds to the tip-mounting step shown in Fig. 2A. At the time t1, since the nozzle 10 does not have a tip 11 mounted thereupon and since capacitance is C2, the capacitance detecting unit 7 outputs a voltage signal "e" (output voltage V2: see Fig. 3). In the time interval of t1 to t2 during which the driving unit 6 drives the dispensing probe 5 and moves the nozzle 10 to the tip-mounting position without a tip 11 mounted on the nozzle, capacitance also remains substantially invariant and the voltage signal "e" is output. At the time t2 that the tip 11 is mounted at the distal end of the nozzle 10 by inserting the nozzle 10 into the tip 11, when the mounted state of the tip 11 on the nozzle 10 is normal, capacitance changes to C3 and a voltage signal "c" (output voltage V3: see Fig. 3) is output. The threshold level set in the mounted-state detecting unit 8B here is any value (e.g., voltage signal "d") that ranges between the voltage signal "c" corresponding to the mounted state, and the voltage signal "e" corresponding to the unmounted state. If the output voltage from the capacitance detecting unit 7 increases above the threshold level "d", the tip 11 is determined to have been properly mounted on the nozzle 10.

A time interval from t2 to t6 corresponds to the suctioning step shown in Fig. 2B. During the time interval of t2 to t3, the nozzle 10 with the tip 11 mounted thereupon is moved to the suctioning position, but capacitance remains substantially invariant and the capacitance detecting unit 7 outputs the voltage signal "c". The threshold level set in the mounted-state detecting unit 8B here is any value (e.g., voltage signal "d") that ranges between the voltage signal "c" corresponding to the mounted state, and the voltage signal "e" corresponding to the unmounted state. If the output voltage from the capacitance detecting unit 7 is greater than the threshold level "d", the nozzle 10 is determined to have been properly moved, and if the output voltage decreases below the threshold level, abnormality such as a fall of the tip 11 from the nozzle 10 is determined to have occurred. The nozzle is moved to the suctioning position and the dispensing probe 5 is lowered to move the nozzle 10 downward into the sample container 2. At the time t3, when the distal end (lower end) of the tip 11 mounted at the distal end of the nozzle 10 is dipped in the sample 1 accommodated in the sample container 2, capacitance changes to C1 and a voltage signal "a" (output voltage V1: see Fig. 3) is output. The threshold level set in the mounted-state detecting unit 8B here is any value (e.g., voltage signal "b") that ranges between the voltage signal "c" and the voltage signal "a" obtained when the tip 11 was dipped. If the output voltage from the capacitance detecting unit 7 increases above the threshold level "b", the distal end of the tip 11 is determined to have been dipped below the liquid surface of the sample 1. The downward movement of the dispensing probe 5 is then stopped. Next during a time interval from t4 to t5, after the sample 1 has been suctioned, the probe moves upward at the time t6, capacitance once again changes to C3, and the voltage signal "c" is output. During the suctioning of the sample 1 by the dispensing probe 5, since capacitance becomes unstable (this state is denoted by a dashed line in Fig. 4), neither the liquid surface detecting unit 8A nor the mounted-state detecting unit 8B conducts detection.

A time interval from t6 to t8 corresponds to the discharging step shown in Fig. 2C. During the time interval of t6 to t8, the nozzle 10 with the tip 11 mounted thereupon is moved to the discharging position, but capacitance remains substantially invariant and the capacitance detecting unit 7 outputs the voltage signal "c". The threshold level set in the mounted-state detecting unit 8B here is any value (e.g., voltage signal "d") that ranges between the voltage signal "c" corresponding to the mounted state, and the voltage signal "e" corresponding to the unmounted state. If the output voltage from the capacitance detecting unit 7 decreases below the threshold level "d", abnormality such as the fall of the tip 11 from the nozzle 10 is determined to have occurred. After the movement to the discharging position, during a time interval from t7 to t8, the sample 1 is discharged from the nozzle 10 of the dispensing probe 5 into the reaction vessel 4. During the discharge of the sample 1 by the dispensing probe 5, since capacitance becomes unstable (this state is denoted by a dashed line in Fig. 4), neither the liquid surface detecting unit 8A nor the mounted-state detecting unit 8B conducts detection.

A time interval from t8 to t9 corresponds to the tip-discarding step shown in Fig. 2D. During the time interval of t8 to t9, the nozzle 10 with the tip 11 mounted thereupon is moved to the tip-discarding position, but capacitance remains substantially invariant and the capacitance detecting unit 7 outputs the voltage signal "c". The threshold level set in the mounted-state detecting unit 8B here is any value (e.g., voltage signal "d") that ranges between the voltage signal "c" corresponding to the mounted state, and the voltage signal "e" corresponding to the unmounted state. If the output voltage from the capacitance detecting unit 7 decreases below the threshold level "d", abnormality such as the fall of the tip 11 from the nozzle 10 is determined to have occurred. At a time t9, upon the tip 11 being removed from the nozzle 10 by the tip removal mechanism (not shown) at the tip-discarding position, capacitance changes to C2 and the voltage signal "e" (output voltage V2: see Fig. 3) is output. The threshold level set in the mounted-state detecting unit 8B here is any value (e.g., voltage signal "d") that ranges between the voltage signal "c" corresponding to the mounted state, and the voltage signal "e" corresponding to the unmounted state. If the output voltage from the capacitance detecting unit 7 decreases below the threshold level "d", the tip 11 is determined to have been properly removed from the nozzle 10.

Operation in the thus-constructed present embodiment is described below.

The driving unit 6 drives the dispensing probe 5 without a tip 11 mounted on the nozzle 10 and moves the nozzle 10 to the tip-mounting position. The tip rack 11A is provided at the tip-mounting position, and a plurality of unused tips 11 are arranged in the tip rack 11A. Each tip 11 is formed so that it can be mounted on and removed from the nozzle 10. The tip 11 can be mounted at the distal end of the nozzle 10 by inserting the tip 11 into the distal end. After normal mounting of the tip 11 on the nozzle 10, the automatic analyzing device moves the nozzle 10 to the suctioning position.

At the suctioning position, the driving unit 6 lowers the dispensing probe 5 to move the nozzle 10 downward into the sample container 2. The downward movement of the dispensing probe 5 is stopped at which the distal end (lower end) of the tip 11 mounted at the distal end of the nozzle 10 is to be dipped in the sample 1 accommodated in the sample container 2. The probe, after suctioning the sample 1, moves upward.

Upon the sample 1 being suctioned into the tip 11, the nozzle 10 with the tip 11 mounted thereupon is moved to the discharging position. The discharging position is where the nozzle 10 of the dispensing probe 5 and the opening in the reaction vessel 4 face each other. In the discharging position, the driving unit 6 moves the dispensing probe 5 downward to insert the nozzle 10 into the reaction vessel 4. After discharging the sample 1, the dispensing probe 5 is moved upward. Upon the sample 1 being discharged from the tip 11 into the reaction vessel 4, the automatic analyzing device moves the nozzle 10 with the tip 11 mounted thereupon, to the tip-discarding step.

The tip-discarding position is where the nozzle 10 of the dispensing probe 5 and the opening in the tip-discarding vessel 12 for accommodating tips 11 discarded after being used are opposed to each other. In the tip-discarding position, the tip removal mechanism not shown removes the tip 11 from the nozzle 10 and throws away the used tip 11 into the tip-discarding vessel 12. After the tip 11 on the nozzle 10 has been properly discarded, the automatic analyzing device proceeds to the suctioning step of the dispensing process for next sample measurement, and repeats the dispensing process as often as necessary.

Beneficial effects in the thus-constructed present embodiment are described below.

During the use of a probe with a disposable tip removably provided thereon, the tip is likely to become dislodged from the probe and fall if mounted inappropriately. The fall of the tip could lead to loss of the sample or the dispensed reaction solution, contamination of an operator-accessible region in the automatic analyzing device, and a spread of contamination due to continued operation of the automatic analyzing device. In case of the tip falling, therefore, it is important to detect the fall and to suppress a further spread of contamination by stopping the operation of the dispensing device. In the prior art, however, no description is given of any preventives or countermeasures against the fall of the tip. One way useable to detect whether the disposable tip is properly mounted on the probe would be by, for example, confirming this using an optical type of sensor. Before the confirmation becomes possible, however, the disposable tip must be moved to a position at which the sensor is to detect the mounted state. In addition, immediately after the fall or other mounting abnormality of the tip has occurred, device operation cannot be stopped, so the spread of contamination or other trouble cannot be suppressed.

In contrast to this, in the present embodiment, an electroconductive tip 11 is removably mounted on a portion of the nozzle 10 of the dispensing probe 5 which carries a desired sample by suctioning and discharging the sample, the portion here being that which is to be dipped in the sample 1 accommodated in the sample container 2. In addition, the mounted state of the tip 11 on the dispensing probe 5 is detected in accordance with the detection result obtained by the capacitance detecting unit 7 that detects the capacitance between the tip 11 and the region having the ground potential. A fall of the tip 11 from the dispensing probe 5 can therefore be confirmed at all times and the spread of contamination due to the fall of the tip 11 can be suppressed.

While an example of using the ground potential 9 as a reference potential has been described in the present embodiment, this reference potential 9 is not limited by the embodiment and may be an electric potential other than the ground potential predefined in the analyzing device. Substantially the same effects as in the embodiment can also be obtained in that case.

In addition, while a description has been given of an example in which the sample container 2 and the reaction vessel 4 are both constructed of an electroconductive material and connected to a region having the ground potential 9 predefined as a reference potential, the sample container 2 and the reaction vessel 4 are not limited by the present embodiment and may use a material not allowing for electrical conductivity, and exhibit an electric potential other than the reference potential (ground potential 9). In this case, the capacitance between the sample container 2 or the reaction vessel 4 and the region having the reference potential 9 will be considered in advance.

Furthermore, while, in the present embodiment, the detection of the mounted tip state on the nozzle 10 is based upon the comparisons between the detection result from the capacitance detecting unit 7 and the threshold level, the way the mounted tip state is detected is not limited by the embodiment and may use a criterion for determining whether a change rate of the detection result lies within a predefined range.

### Description of Reference Numbers

- 1: Sample to be assayed
- 2: Sample container
- 3: Liquid mixture
- 4: Reaction vessel
- 5: Dispensing probe
- 6: Driving unit
- 7: Capacitance detecting unit
- 8: Control unit
- 8A: Liquid surface detecting unit
- 8B: Mounted-state determining unit
- 9: Ground potential (Reference potential)
- 10: Nozzle
- 11: Tip
- 11A: Tip rack
- 12: Tip-discarding vessel
- 100: Automatic analyzing device

## Claims

1. An automatic analyzing device for analyzing a sample to be assayed, the device comprising:
a sample container for accommodating the sample to be assayed;
a probe mechanism for dispensing the sample to be assayed;
an electroconductive tip removably mounted on a portion of the probe mechanism, the portion being to be dipped in the sample to be assayed;
a capacitance detecting unit for detecting capacitance between the tip of the probe mechanism and a region having a reference electric potential predefined in the automatic analyzing device; and
a mounted-state determining unit for determining, in accordance with a detection result by the capacitance detecting unit, a mounted state of the tip with respect to the probe mechanism.

2. The automatic analyzing device according to claim 1, wherein:
the sample to be assayed that is accommodated in the sample container is electrically connected to the region having the reference electric potential.

3. The automatic analyzing device according to claim 1, wherein:
the mounted-state determining unit determines the mounted state of the tip in accordance with a comparison result between the capacitance and a predefined threshold level.

4. The automatic analyzing device according to claim 1, wherein:
the mounted-state determining unit determines the mounted state of the tip in accordance with a change rate of the capacitance.

5. A method of analysis in an automatic analyzing device equipped with a sample container for accommodating a sample to be assayed, a probe mechanism for dispensing the sample, and an electroconductive tip removably mounted on a portion of the probe mechanism, the portion being to be dipped in the sample, the method comprising the steps of:
detecting capacitance between the tip of the probe mechanism and a region having a reference electric potential predefined in the automatic analyzing device; and
determining, in accordance with a detection result by a capacitance detecting unit, a mounted state of the tip with respect to the probe mechanism.
